# FASCICULE DE BREVET EUROPEEN

(11) **EP 2 428 449 B1**
(45) Date de publication et mention de la délivrance du brevet: **17.10.2012**
(21) Numéro de dépôt: 11180629.5
(22) Date de dépôt: 08.09.2011
(51) Int. Cl.: B64G 1/58

(54) **Dispositif d'isolation thermique et procédé de fabrication**
Vorrichtung für Wärmeisolation und Herstellungsverfahren
Thermal insulation device and manufacturing method

(30) Priorité: 10.09.2010 FR 1003632
(43) Date de publication de la demande: 14.03.2012
(73) Titulaire: Thales, 92200 Neuilly Sur Seine (FR)
(72) Inventeur: Paci, Laudine, 04200 Sisteron (FR); Nghiem, Marie, 06210 Mandelieu la Napoule (FR); Monticelli, Sylvie, 06210 Mandelieu la Napoule (FR)
(74) Mandataire: Esselin, Sophie

(56) Documents cités:
- US-A- 4 489 906
- US-A- 5 429 875
- US-A1- 2003 082 332
- DATABASE WPI Week 199623 Thomson Scientific, London, GB; AN 1996-224973 XP002627824, -& JP 8 085498 A (NISSAN MOTOR CO LTD) 2 avril 1996 (1996-04-02)
- DATABASE WPI Week 199017 Thomson Scientific, London, GB; AN 1990-129729 XP002627825, -& JP 2 080230 A (MITSUBISHI DENKI KK) 20 mars 1990 (1990-03-20)

## Description

La présente invention porte sur les dispositifs d'isolation thermique pour assurer l'isolation thermique des structures spatiales comme, par exemple, les satellites. Ces dispositifs permettent d'assurer la protection thermique des équipements qui sont fixés à la structure spatiale. Ces dispositifs comprennent classiquement un isolant thermique multicouche communément appelé MLI en référence à l'expression anglo-saxonne "MultiLayer heat Insulation".

Les isolants thermiques multicouches comprennent classiquement un empilement de couches successives de polymère isolant. Les couches successives comprennent une couche externe conductrice uniquement sur sa face interne destinée à faire face à l'environnement spatial, des couches intermédiaires conductrices sur leurs deux faces séparant la couche externe et une couche interne conductrice sur ses deux faces destinée à faire face à une structure spatiale. Le document US2003/0082332 décrit un tel dispositif d'isolation thermique.

L'accumulation de charges électrostatiques au niveau de la partie isolante des couches de la MLI peut engendrer des décharges électrostatiques ESD (en référence à l'expression anglo-saxonne "Electrostatic Discharges") qui peuvent endommager ou altérer les caractéristiques de ces isolants et détériorer les équipements électriques embarqués sur les structures spatiales.

Pour éviter l'accumulation de charges électrostatiques au niveau des isolants thermiques, les isolants thermiques multicouches sont généralement connectés électriquement à la masse de la structure spatiale et plus particulièrement à sa masse flottante.

La mise à la masse d'un isolant thermique consiste classiquement à établir la connexion électrique entre les différentes couches de l'isolant thermique au moyen d'un élément électriquement conducteur qui est, par exemple, un adhésif conducteur ou un clinquant métallique en accordéon. L'élément électriquement conducteur est ensuite riveté à l'isolant au moyen d'un rivet perçant toutes les couches de l'isolant comme décrit dans le document US4 489 906. Le rivet assure cohésion de l'isolant et le maintien du contact entre l'élément électriquement conducteur et les couches successives. Le rivet est enfin relié à la masse flottante de la structure spatiale.

On réalise généralement la mise à la masse à plusieurs endroits de la MLI ce qui implique l'implantation de plusieurs éléments électriquement conducteurs et rivets associées.

Or, l'utilisation d'un rivet perçant les couches de l'isolant thermique multicouche MLI induit un pont thermique qui est à l'origine d'une diminution des performances d'isolation thermique de l'isolant multicouche.

Par ailleurs, les rivets induisent une augmentation non négligeable de la masse du dispositif d'isolation thermique.

Du document JP08085498, on connaît un dispositif d'isolation thermique multicouche comprenant une pluralité de couches empilées formant un escalier dont les marches sont obtenues en courbant le multicouches.

Le document JP020802330 divulgue une méthode de réalisation d'une liaison électrique entre l'ensemble des couches d'un isolant thermique multicouche.

La présente invention se propose de remédier aux inconvénients précités.

Par ailleurs, les mises à la masse actuelles sont des masses mortes qui peuvent provoquer une fragilisation voire un déchirement des isolants thermiques multicouches lors du lancement de l'ensemble dans l'espace.

Un autre but de l'invention est de palier cet inconvénient.

A cet effet, l'invention a pour objet un dispositif d'isolation thermique d'une structure spatiale comprenant un isolant thermique multicouche comprenant un empilement de N couches, N étant un nombre entier supérieur à 3, comprenant une couche externe destinée à faire face à l'environnement spatial, des couches intermédiaires et une couche interne faisant face à une structure spatiale, lesdites couches étant électriquement conductrices sur leurs faces internes orientées vers la structure spatiale, caractérisé en ce que les couches intermédiaires et la couche interne sont percées de trous agencés de sorte à ménager au moins un escalier dont les paliers successifs sont formés par des portions de faces internes de couches successives prises parmi les N couches, ledit dispositif comprenant en outre un dispositif de mise à la masse desdites N couches comprenant au moins un élément électriquement conducteur déposé sur les paliers d'au moins un escalier de sorte à établir la liaison électrique entre les couches à partir desquelles sont formés les paliers dudit au moins un escalier sur lequel l'élément électriquement conducteur est déposé.

Le dispositif selon l'invention présente de bonnes performances thermiques et, du fait de l'utilisation d'un nombre réduit de pièces, une faible masse et un faible coût.

La géométrie en escalier de l'isolant permet de créer une surface de contact avec un élément conducteur sur chaque couche de l'isolant. Cette géométrie permet, sans utiliser d'élément métallique traversant, de mettre à la masse un isolant thermique multicouche tout en garantissant sa cohésion et le contact électrique entre les couches successives et l'élément électrique.

Les avantages précités sont d'autant plus présents que du fait de la géométrie proposée, les surfaces de contact entre les couches successives de l'isolant et le (ou les) élément(s) électriquement conducteur(s) sont importantes. Par conséquent, la résistance électrique entre les couches de l'isolant est faible ce qui permet de limiter le nombre de mises à la masse sur un même isolant thermique.

Par ailleurs, le procédé de fabrication du dispositif selon l'invention est simple à mettre en oeuvre et rapide. Il n'est pas nécessaire de démonter un empilement de couches pour réaliser les escaliers.

Avantageusement, le dispositif comprend un ensemble d'escaliers agencé de sorte que chacune des N couches comprend au moins une portion de sa face interne formant un palier d'un escalier, les paliers des différents escaliers dudit ensemble d'escaliers étant formés à partir de couches différentes.

Selon une caractéristique avantageuse, au moins un élément électriquement conducteur recouvre au moins un escalier.

Avantageusement, au moins un élément électriquement conducteur comble l'espace séparant au moins un escalier et le plan défini par la face externe de la couche interne.

Avantageusement, le dispositif comprend au moins un premier moyen de fixation d'un élément électriquement conducteur à la structure spatiale.

Selon une caractéristique au moins un premier moyen de fixation comprend un dispositif d'accrochage à crochet et boucle, une première partie dudit dispositif d'accrochage étant fixée audit élément électriquement conducteur, ladite première partie étant apte à coopérer avec une deuxième partie du dispositif fixée à ladite structure spatiale.

Avantageusement, au moins un premier moyen de fixation assure la fixation d'un élément électriquement conducteur à la structure spatiale avec conduction électrique.

Avantageusement, le dispositif comprend des trous concentriques agencés de sorte à ménager au moins un escalier dont les paliers successifs sont formés par des portions des surfaces internes de couches successives.

Avantageusement, le dispositif comprend des trous non concentriques agencés de sorte à ménager au moins un escalier dont les paliers successifs sont formés par des portions des surfaces internes de couches successives.

Avantageusement, le dispositif comprend des trous circulaires agencés de sorte à ménager au moins un escalier dont les paliers successifs sont formés par des portions des surfaces internes.

Avantageusement, plus une couche d'un escalier est proche de la couche interne, plus la taille du trou qui y est ménagé est importante.

Avantageusement, ledit isolant est agencé de sorte à s'étendre continûment sur l'intégralité de sa superficie.

L'invention a également pour objet un procédé de fabrication d'un dispositif d'isolation thermique multicouche selon l'invention, comprenant au moins une étape de formation d'au moins un escalier, ladite étape de formation consistant à percer des trous dans les couches qui, parmi les couches successives, appartiennent aux couches intermédiaires et/ou interne.

Avantageusement, le procédé comprend au moins une étape de formation d'un escalier réalisée lors d'une étape d'empilement des couches successives.

Avantageusement, le procédé comprend au moins une étape de formation d'un escalier consistant à percer des trous présentant des dimensions différentes dans lesdites couches successives.

Avantageusement, le procédé comprend au moins une étape de formation d'un escalier consistant à percer des trous présentant des dimensions sensiblement identiques dans lesdites couches successives.

Avantageusement, le procédé comprend au moins une étape de dépôt d'au moins un élément électriquement conducteur sur les paliers d'au moins un escalier de sorte à connecter électriquement les couches à partir desquels les paliers dudit (desdits) escalier(s) est (sont) réalisé(s) entre elles.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement une coupe d'un premier exemple de dispositif d'isolation thermique selon l'invention utilisant un premier exemple d'isolant thermique,
- la figure 2 est une vue éclatée d'une coupe de l'isolant thermique représenté à la figure 1,
- la figure 3 est une vue de l'isolant thermique représenté à la figure 1 face à la face interne de la couche interne,
- la figure 4 est une représentation schématique d'un exemple d'isolant thermique,
- la figure 5 représente schématiquement les étapes d'un procédé de fabrication d'un dispositif selon l'invention,
- la figure 6 représente un troisième exemple d'isolant thermique selon l'invention,
- la figure 7 représente un deuxième exemple de dispositif d'isolation thermique selon l'invention utilisant un quatrième exemple d'isolant thermique.

D'une figure à l'autre, les mêmes éléments sont repérés par les mêmes références.

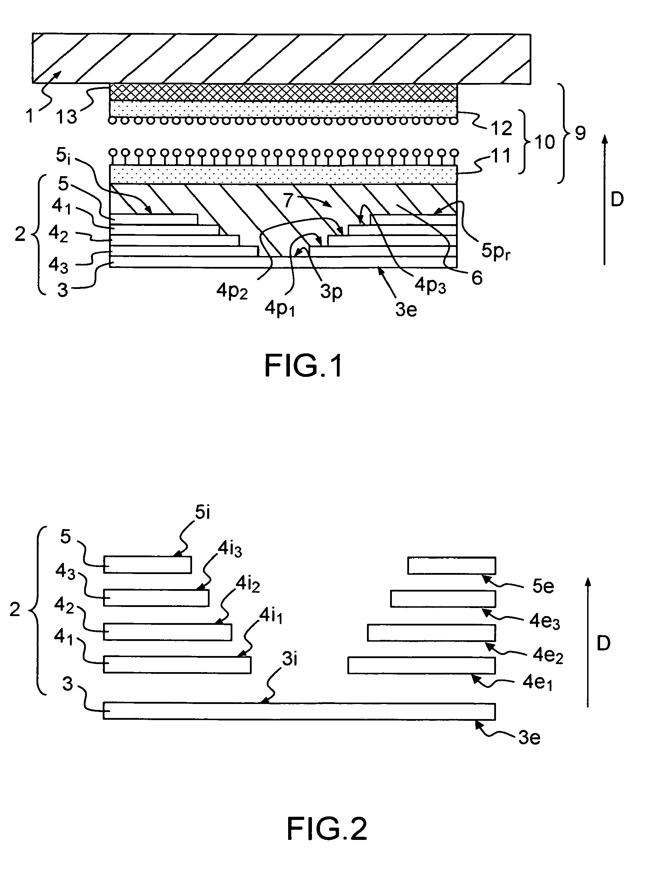

Sur la figure 1, on a représenté, en coupe, un premier exemple de dispositif d'isolation thermique selon l'invention pour assurer l'isolation thermique des structures spatiales comme les satellites. Cet exemple est le mode de réalisation préféré de l'invention.

Comme décrit en référence à l'art antérieur, le dispositif d'isolation thermique comprend un isolant thermique multicouche 2 selon l'invention. L'isolant thermique multicouche 2 comprend un empilement d'un nombre N de couches 3, 4ⱼ (avec j=1 à M et M= 3 sur l'exemple de la figure 1), 5 conductrices sur leurs faces internes respectives. Les N couches 3, 4ⱼ, 5 comprennent une couche externe 3 destinée à faire face à l'environnement spatial, des couches intermédiaires 4ⱼ, j= 1 à M, séparant la couche externe 3 et une couche externe 5 destinée à faire face à une structure spatiale 1.

Une vue éclatée de l'exemple d'isolant thermique représenté à la figure 1 est représentée sur la figure 2.

Les N couches sont électriquement conductrices sur leurs faces internes respectives 3i, 4iⱼ, 5i.

Classiquement, les couches intermédiaires 4ⱼ et interne 5 sont électriquement conductrices sur leurs faces externes respectives 4eⱼ, 5e contrairement à la couche externe 3 dont la face externe 3e est électriquement isolante.

Généralement, un isolant thermique multicouche MLI comprend un empilement de feuilles polymère isolantes métallisées sur au moins un face et de feuilles isolantes (voile polyester, tissus glass ou autre non représentées sur les figures).

Par face interne d'une couche, on entend la face de la couche qui est destinée à être orientée vers la structure spatiale. Par face externe d'une couche, on entend la face de la couche qui est destinée à être orientée vers l'espace. La direction d'empilement D représentée sur les figures est orientée depuis l'environnement spatial vers la structure spatiale 1. On n'a donc pas référencé les faces internes et externes des différentes couches sur toutes les figures car leur positionnement découle directement et sans ambiguité de cette direction.

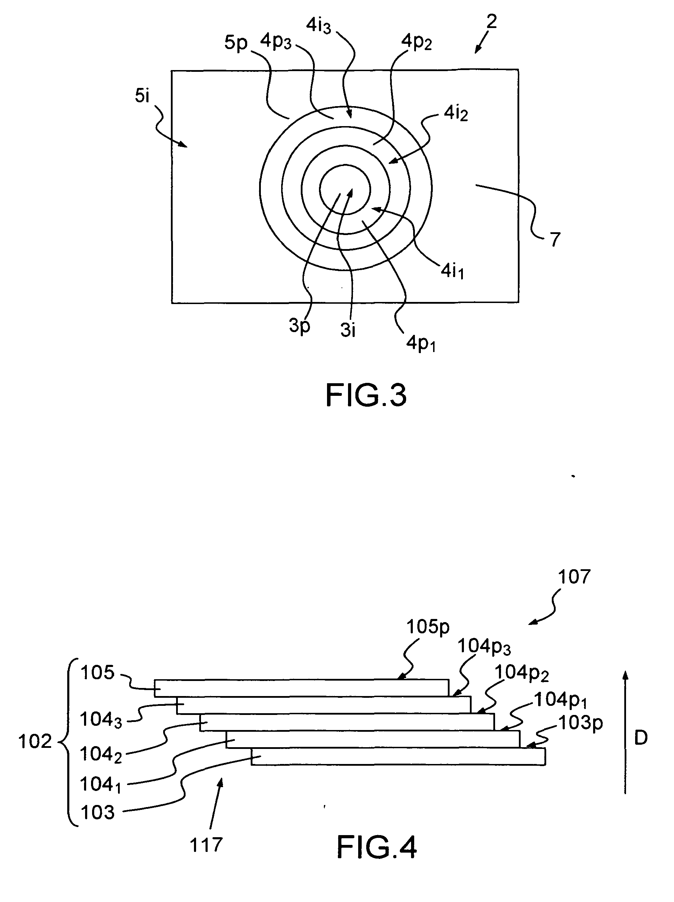

Dans le dispositif selon l'invention, l'isolant thermique 2 comprend un escalier 7 dont les paliers successifs 3p, 4pⱼ, 5p sont formés par des portions des surfaces internes 3i, 4iⱼ, 5i de couches successives 3, 4ⱼ, 5. Sur la réalisation de la figure 1, les couches successives sont les N couches successives de l'empilement. Sur la figure 3, l'exemple d'isolant thermique 2 utilisé à la figure 1 est représenté en vue de face, face à la face interne 5i de la couche interne 5.

Par paliers successifs d'un escalier, on entend les marches successives dudit escalier ainsi que les plateformes ménagées en partie supérieure et inférieure dudit escalier. Les parties supérieures et inférieures sont déterminées par rapport au sens de la montée de l'escalier.

Tous les paliers d'un escalier sont accessibles depuis un même côté de l'isolant thermique.

Le dispositif d'isolation thermique selon l'invention comprend un dispositif de mise à la masse de l'isolant thermique comprenant un élément électriquement conducteur 6 pour connecter électriquement les couches successives 3, 4ⱼ, 5 dudit escalier entre-elles et un dispositif pour connecter électriquement l'élément conducteur à la masse. Il permet de connecter les marches à la masse. Ici, il connecte toutes les couches à la masse.

L'élément électriquement conducteur 6 est, par exemple, un film ou une pâte.

L'élément électriquement conducteur 6 est déposé sur les paliers successifs 3p, 4pⱼ, 5p de l'escalier 7 afin de connecter électriquement les couches successives 3, 4ⱼ, 5 entre-elles. Autrement dit, l'élément électriquement conducteur 6 est en contact avec les paliers successifs et les relie électriquement entre eux. Sur la réalisation de la figure 1, l'élément conducteur 6 relie électriquement les N couches de l'empilement entre-elles.

Ainsi, le contact électrique entre les N couches de l'isolant thermique est assuré sans perçage à travers toutes les couches.

La réalisation de la figure 1 met à profit cette caractéristique en utilisant un isolant thermique 2 selon l'invention agencé de sorte à s'étendre continûment sur l'intégralité de sa superficie. Autrement dit, l'isolant thermique représenté à la figure 2 est agencé de sorte à recouvrir continûment une surface située au droit dudit isolant.

La superficie de l'isolant est la taille de l'espace délimité par les bordures des couches, au droit des couches.

En effet, dans le dispositif de la figure 1, les N couches de l'empilement sont superposées les unes aux autres. La couche externe 3 de l'isolant thermique 2 s'étend continûment sur toute la superficie de l'isolant. Aucune découpe n'est réalisée dans cette couche. On conserve la protection thermique de la couche externe 3 au droit de la structure spatiale 1 sur toute la superficie de l'isolant 2. Cela permet de garantir une bonne isolation thermique de la structure spatiale 1 et, plus particulièrement, une bonne protection thermique des équipements, non représentés, fixés à la structure spatiale 1. Par ailleurs, la tenue mécanique d'un isolant thermique 2 de ce type est meilleure que lorsque l'isolant thermique est percé à travers tout.

Un exemple d'isolant thermique 102 est représenté sur la figure 4. Les bords des N couches consécutives 103, 104ⱼ (j= 1 à 3), 105 sont décalés les uns par rapport aux autres de sorte à obtenir un escalier 107 dont les paliers 105p, 104pj, 103p sont formés par des portions des surfaces internes des N couches successives. Un second escalier 117 est formé mais les paliers sont formés par des portions des surfaces externes des N couches successives. Une surface située au droit de l'escalier 107 est toujours recouverte par une couche de l'isolant. Autrement dit, l'isolant thermique 102 s'étend continûment sur l'intégralité de sa superficie. En d'autres termes, en tout point de la superficie de l'isolant thermique, il existe au moins une couche d'isolant thermique qui assure la protection thermique de la structure spatiale.

Une variante d'isolant thermique selon l'invention ne s'étend pas continûment sur toute sa superficie. On peut, par exemple, percer toutes les couches de l'isolant.

L'élément électriquement conducteur 6 de la figure 1, en reliant électriquement les paliers successifs 3p, 4pⱼ, 5p d'un escalier entre eux, assure la cohésion de l'isolant thermique multicouche 2. Le dépôt de l'élément électriquement conducteur 6 sur les paliers successifs d'un escalier 7 permet d'éviter la fragilisation de l'isolant thermique au niveau de l'escalier 7.

Avantageusement, l'élément électriquement conducteur 6 est fixé aux à l'isolant thermique multicouche 2.

L'élément électrique 6 est, par exemple, fixé à l'isolant thermique 2 au moyen d'un moyen de fixation non représenté, par exemple un adhésif, de préférence électriquement conducteur. L'adhésif est, par exemple, porté par l'élément conducteur 6. Le moyen de fixation s'étend, par exemple, sur toute la surface de l'élément électriquement conducteur faisant face à l'isolant thermique 2 ou au moins sur les portions de l'élément conducteur 6 faisant face aux paliers. Cela permet de recourir à un procédé de montage simple du dispositif selon l'invention étant donné que l'étape de dépôt de l'élément conducteur sur les découpes en escalier correspond en outre à l'étape de fixation de l'élément électriquement conducteur 6 à l'isolant thermique 2.

La cohésion de l'isolant thermique est ainsi améliorée.

L'escalier 7 du premier exemple d'isolant thermique 2 selon l'invention délimite un évidement réalisé dans les couches interne 5 et intermédiaires 4ⱼ. Avantageusement, l'élément conducteur 6 recouvre les paliers de l'escalier 7.

La cohésion est encore améliorée lorsque, comme représenté sur la figure 1, l'élément électriquement conducteur 6 est agencé de sorte à combler l'évidement. Autrement dit, l'élément électriquement conducteur comble l'espace séparant l'escalier 7 et le plan défini par la face externe de la couche interne

Le dispositif selon l'invention comprend en outre un dispositif de fixation de l'isolant thermique à la structure spatiale 1.

Le dispositif de fixation de l'isolant thermique à la structure spatiale 1 comprend avantageusement, comme représenté sur la figure 1, un premier moyen de fixation 9 de l'élément électriquement conducteur 6 à la structure spatiale 1. Ce premier moyen de fixation 9, en empêchant le mouvement de l'élément électriquement conducteur 6 par rapport à la structure spatiale 1, n'induit pas de masse morte sur l'isolant thermique 6. Cela permet de limiter les contraintes dynamiques affectant l'isolant thermique 2 et de garantir une bonne tenue mécanique du dispositif selon l'invention lorsque celui-ci est soumis à des vibrations, par exemple lors du lancement dans l'espace de la structure spatiale.

Avantageusement, le premier moyen de fixation 9 de l'élément électriquement conducteur 6 à la structure spatiale 1 permet de fixer ledit élément électriquement conducteur 6 à la structure spatiale 1 de façon amovible. Il fait avantageusement partie d'un dispositif de fixation amovible de l'isolant thermique à la structure spatiale. Le caractère démontable du dispositif de fixation favorise l'accès aux équipements de la structure spatiale.

Sur l'exemple de la figure 1, le premier moyen de fixation 9 de l'élément conducteur 6 à la structure spatiale 1 est représenté à la figure 1 comprend un dispositif d'accrochage 10 à crochet et boucles. Une première partie 11 dudit dispositif d'accrochage 10 est fixée à l'élément électriquement conducteur et, la première partie 11 est apte à coopérer avec une deuxième partie 12 dudit dispositif fixée à la structure spatiale 1. La deuxième partie est fixée à la structure spatiale 1 au moyen d'un deuxième moyen de fixation 13.

Avantageusement, comme sur l'exemple de la figure 1, le premier moyen de fixation 9 fixe l'élément conducteur 6 à la structure spatiale 1 avec conduction électrique. Ainsi, le dispositif pour connecter électriquement l'élément conducteur 6 à la masse comprend le premier moyen de fixation 9.

Sur l'exemple de la figure 1, les première et deuxième parties 11, 12 du dispositif d'accrochage 10 à crochet et à boucle sont électriquement conductrices et fixées à l'élément électriquement conducteur et respectivement à la structure spatiale 1 avec conduction électrique. Le positionnement de la deuxième partie 12 est choisi de sorte que la deuxième partie 12 soit en contact électrique avec le réseau de mise à la masse de la structure spatiale 1 via le deuxième moyen de fixation 13.

Le deuxième moyen de fixation 13 est, par exemple, électriquement conducteur. Il s'agit, par exemple, d'un adhésif électriquement conducteur. Sur l'exemple de la figure 1, le moyen de fixation de l'élément conducteur au premier moyen de fixation n'est pas représenté, il s'agit, par exemple, d'un adhésif électriquement conducteur porté par l'élément conducteur 6.

Le premier moyen de fixation 9 de l'élément conducteur à la structure spatiale peut être configuré de sorte à assurer la fixation de l'élément conducteur 6 à l'isolant thermique 2. Par exemple, la première partie du dispositif d'accrochage peut être configuré pour fixer l'élément conducteur à l'isolant thermique.

On utilise avantageusement un élément électriquement conducteur 6 du type adhésif double face pour réaliser les liaisons conductrices avec les paliers 3p, 4pⱼ, 5p, d'une part, et le dispositif d'accrochage 10 d'autre part.

En variante, le dispositif pour relier l'élément conducteur 6 à la masse de la structure spatiale 1 est dépourvu de moyen de fixation de l'élément électriquement conducteur à la structure spatiale. Il n'empêche pas le mouvement de l'élément électriquement conducteur par rapport à la structure spatiale.

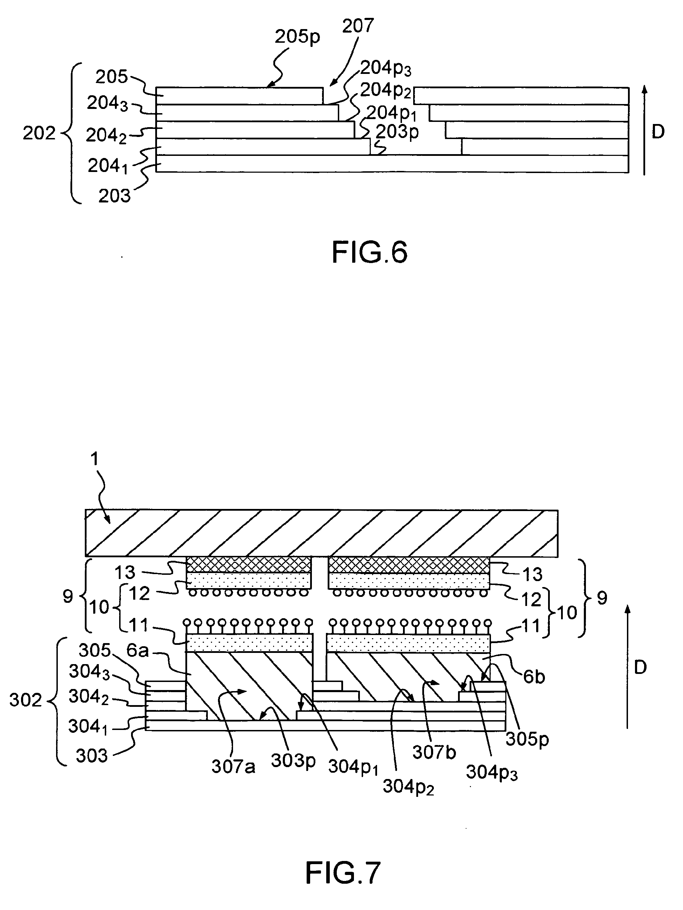

On a représenté sur la figure 7 un deuxième exemple de dispositif d'isolation thermique selon l'invention. Ce dispositif comprend un ensemble d'escaliers comprenant un premier escalier 307a et un deuxième escalier 307b. L'ensemble d'escaliers est agencé de sorte que chacune des N couches 303, 304ⱼ, 305 comprend au moins une portion de sa face interne formant un palier 303p, 304pⱼ (j= 1 à 3), 305p d'un escalier 307a, 307b. Le premier et le deuxième escaliers sont formés à partir de couches différentes. Les paliers du premier escalier 307a sont formés à partir de la couche externe et de la première couche intermédiaire. Les paliers du deuxième escalier 307b sont formés à partir des couches restantes 304₂, 304₃, 305. Le dispositif de mise à la masse de l'isolant thermique multicouche 302 comprend dans ce mode de réalisation une pluralité d'éléments conducteurs 6a, 6b. Le premier élément conducteur 6a est déposé sur les paliers du premier escalier 307a. Il connecte électriquement les couches à partir desquelles le premier escalier 307a est réalisé 303, 304₁. Le deuxième élément conducteur 6b est déposé sur les paliers du deuxième escalier 307b. Il connecte électriquement les couches à partir desquelles le deuxième escalier est réalisé 304₂, 304₃, 305. Chacun des éléments conducteurs est relié à la masse flottante de la structure spatiale au moyen d'un dispositif de fixation 9 identique à celui qui est représenté sur la figure 1. Dans ce mode de réalisation, la connexion électrique de chacun des éléments conducteurs à la masse est réalisé de la même manière que sur la figure 1.

Ce mode de réalisation est particulièrement intéressant lorsque le nombre de feuilles est trop important pour aménager des surfaces de contact suffisantes avec chacune des couches au moyen d'un unique escalier. On réalise donc la mise à la masse en plusieurs fois, c'est-à-dire au moyen de plusieurs escaliers.

En variante, on aurait pu déposer un unique élément conducteur sur les paliers des deux escaliers pour relier les N couches à la masse.

En variante, certains des paliers du premier escalier pourraient être réalisés à partir des même couches que certains des paliers du deuxième escalier.

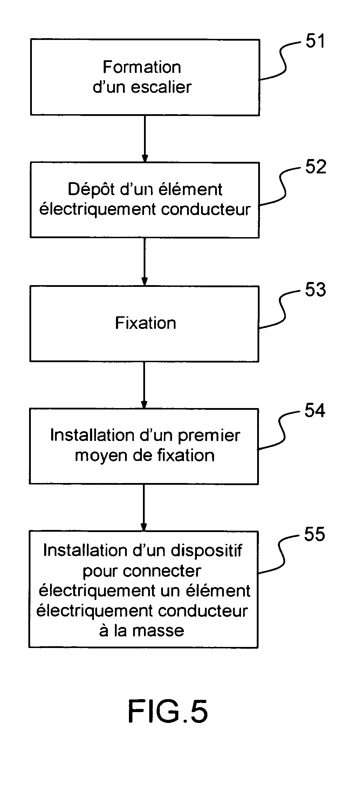

Sur la figure 5, on a représenté les étapes d'un procédé de fabrication d'un dispositif selon l'invention.

Le procédé de fabrication d'un dispositif selon l'invention comprend tout d'abord un procédé de fabrication d'un isolant thermique multicouche comprenant au moins une étape de formation d'au moins un escalier, ladite étape de formation consistant à percer des trous dans les couches qui, parmi les couches successives, appartiennent aux couches intermédiaires et/ou interne.

Les paliers successifs du (des) escalier(s) sont destinés à être mis en contact avec un élément électriquement conducteur 6 de sorte à connecter électriquement les N couches entre elles.

L'isolant 102 représenté à la figure 4 comprend des couches successives dont les dimensions sont sensiblement identiques. Les couches successives 103, 104j, 105 sont agencées les unes par rapport aux autres de sorte que l'isolant thermique multicouche 102 comprend au moins un escalier 107 dont les paliers successifs sont formés par des portions des surfaces internes de couches 103, 104j, 105 successives, lesdits paliers successifs 105p, 104pj, 103p s'étendant en bordure des couches successives 103, 104j, 105. L'étape 51 de formation d'un escalier 107 peut, par exemple, consister à décaler, dans un plan perpendiculaire à la direction D d'empilement, des couches successives 103, 104j, 105 initialement superposées. La direction d'empilement est orientée, sur les figures, depuis la couche externe vers la couche interne de l'empilement. On obtient alors un isolant thermique 102 du type de celui de la figure 4. L'escalier se trouve en bordure de l'isolant. L'étape 51 peut également être réalisée lors de l'empilement des couches successives ce qui réduit le temps de fabrication de l'isolant thermique multicouche. On peut également envisager un isolant thermique présentant un escalier dont les paliers successifs sont formés en bordure de couches successives présentant des dimensions différentes. On peut, par exemple, former l'escalier lors d'une étape de découpe des bordures de couches présentant, initialement des dimensions identiques ou bien lors de l'étape d'empilement des couches successives.

L'étape de formation d'un escalier 51 consiste à percer des trous dans les couches qui, parmi les couches successives, appartiennent aux couches intermédiaires 4ⱼ et/ou interne 5 et éventuellement externe, de façon à obtenir l'escalier souhaité. On obtient ainsi des escaliers en partie centrale de l'isolant thermique.

L'isolant 2 représenté aux figures 1 et 3 comprend un empilement de couches dont les couches internes et intermédiaires sont percées de trous concentriques.

Plus une couche est proche de la couche interne, plus la taille du trou qui y est ménagé est important, la couche interne présentant le trou de plus grande taille.

Pour obtenir cet isolant, on perce les couches intermédiaires et la couche interne de trous concentriques. Un tel perçage est, par exemple, réalisé au moyen d'un outillage spécifique de type perforatrice. On utilise avantageusement une perforatrice sur laquelle s'adaptent des emporte pièces à pièces interchangeables présentant des tailles différentes, de manière à obtenir des découpes de taille croissante. Ainsi les découpes peuvent s'effectuer sur chaque feuille de manière rapide et précise.

L'isolant représenté à la figure 6 présente des couches intermédiaires 204ⱼ (j= 1 à 3) et interne 205 dans lesquelles sont ménagés des trous non concentriques présentant des dimensions sensiblement identiques. Les trous sont décalés les uns par rapport aux autres dans un plan perpendiculaire à la direction d'empilement D de sorte à former un escalier 207 dont les paliers successifs sont formés par des portions des surfaces internes des N couches successives.

On peut obtenir un isolant thermique 202 du type de celui de la figure 6 en perçant des trous non concentriques de tailles sensiblement identiques dans les couches intermédiaires 204ⱼ (j= 1 à 3) et interne 205. La couche externe 203 n'est avantageusement pas percée. Les centres des trous sont décalés de façon appropriée pour obtenir un escalier dont les paliers 203p, 204pⱼ, 205p successifs sont formés par des portions des surfaces internes des N couches successives. Par exemple le perçage s'effectue avec une perforatrice simple comprenant un motif prédéfini. L'escalier s'obtient par décalage des strates.

Alternativement on peut utiliser un emporte pièce élémentaire de petite taille déplacé par petits pas pour former l'ouverture désirée selon la méthode du grignotage.

Avantageusement, les trous réalisés dans les couches sont circulaires. On évite ainsi les amorces de déchirement des couches.

Avantageusement, l'étape de formation d'au moins un escalier est réalisée de sorte à obtenir un isolant thermique recouvrant continûment une surface située au droit dudit isolant.

Le procédé de fabrication d'un dispositif selon l'invention comprend au moins une étape de dépôt 52 d'au moins un élément électriquement conducteur 6 sur les paliers d'au moins un escalier de sorte à connecter électriquement entre elles les couches successives à partir desquels les paliers dudit (desdits) escalier(s) est (sont) réalisé(s) entre elles.

Le procédé de fabrication comprend avantageusement au moins une étape de fixation 53 du (des) élément(s) électriquement conducteur(s) à l'isolant thermique.

Cette étape est avantageusement l'étape de dépôt 52 du (des) élément(s) électriquement conducteur(s), par exemple, lorsque ce dernier est muni d'un adhésif.

Avantageusement, le procédé de fabrication comprend au moins une étape d'installation 54 d'un premier moyen de fixation de l'élément électriquement conducteur sur ledit escalier et une étape d'installation 55 d'un dispositif pour connecter électriquement le(s)élément électriquement conducteur(s) 6 à la masse de la structure spatiale 1.

Avantageusement l'étape d'installation d'un moyen de connexion 55 est aussi l'étape d'installation d'un dispositif de fixation 54. C'est par exemple le cas pour l'exemple de la figure 1.

Le procédé de fabrication du dispositif selon l'invention est simple et rapide du fait de la géométrie de l'isolant thermique. Les paliers d'un escalier étant tous dégagés lorsque l'on fait face à la face interne de la couche interne de l'isolant, la connexion des couches successives est réalisée en une unique opération de dépôt de l'élément électriquement conducteur. Par ailleurs, l'élément électriquement conducteur peut être directement relié à la masse de la structure spatiale.

La mise à la masse d'un isolant multicouche peut être réalisée au moyen de plusieurs escaliers agencés à plusieurs endroits de l'isolant. Les différents escaliers peuvent être formés de différentes manières parmi celles qui sont exposées en référence aux différentes figures. Une surface de contact de l'ordre du mm² entre l'élément électriquement conducteur et chaque palier est suffisante.

## Revendications

1. Dispositif d'isolation thermique d'une structure spatiale (1) comprenant un isolant thermique multicouche (2) comprenant un empilement de N couches (3, 4ⱼ, 5), N étant un nombre entier supérieur à 3, comprenant une couche externe (3) destinée à faire face à l'environnement spatial, des couches intermédiaires (4ⱼ) et une couche interne (5) destinée à faire face à une structure spatiale (1), lesdites couches étant électriquement conductrices sur leurs faces internes (3i, 4iⱼ, 5i) orientées vers la structure spatiale (1), ledit dispositif comprenant en outre A: un dispositif de mise à la masse desdites N couches, **caractérisé en ce que** les couches intermédiaires (4j) et la couche interne (5) sont percées de trous agencés de sorte à ménager au moins un escalier (7) dont les paliers successifs (3p, 4pⱼ, 5p) sont formés par des portions de faces internes de couches successives (3i, 4iⱼ, 5i) prises parmi les N couches, ledit dispositif de mise à la masse desdites N couches comprenant au moins un élément électriquement conducteur (6) déposé sur les paliers (3p, 4pⱼ, 5p) d'au moins un escalier (7) de sorte à établir la liaison électrique entre les couches (3i, 4iⱼ, 5i) à partir desquelles sont formés les paliers (3p, 4pⱼ, 5p) dudit au moins un escalier sur lequel l'élément électriquement conducteur (6) est déposé.

2. Dispositif d'isolation thermique selon la revendication précédente, comprenant un ensemble d'escaliers (307a, 307b) agencé de sorte que chacune des N couches (303, 304ⱼ, 305) comprend au moins une portion de sa face interne formant un palier (303p, 304pⱼ, 305p) d'un escalier (307a, 307b), les paliers des différents escaliers dudit ensemble d'escaliers étant formés à partir de couches différentes.

3. Dispositif d'isolation thermique selon l'une quelconque des revendications précédentes, dans lequel au moins un élément électriquement conducteur (6) recouvre au moins un escalier (7).

4. Dispositif d'isolation thermique selon la revendication précédente, dans lequel au moins un élément électriquement conducteur (6) comble l'espace séparant au moins un escalier et le plan défini par la face externe (5e) de la couche interne (5).

5. Dispositif d'isolation thermique selon l'une quelconque des revendications précédentes, comprenant au moins un premier moyen de fixation (9) d'un élément électriquement conducteur (6) à la structure spatiale (1).

6. Dispositif d'isolation thermique selon la revendication précédente, dans lequel au moins un premier moyen de fixation (9) comprend un dispositif d'accrochage (10) à crochet et boucle, une première partie (11) dudit dispositif d'accrochage étant fixée audit élément électriquement conducteur (6), ladite première partie (11) étant apte à coopérer avec une deuxième partie (12) du dispositif (10) fixée à ladite structure spatiale (1).

7. Dispositif d'isolation thermique multicouche selon l'une quelconque des revendications 5 à 6, comprenant au moins un premier moyen de fixation (9) assurant la fixation d'un élément électriquement conducteur (6) à la structure spatiale (1) avec conduction électrique.

8. Dispositif d'isolation thermique multicouche selon l'une des revendications précédentes, comprenant des trous concentriques agencés de sorte à ménager au moins un escalier (7) dont les paliers successifs (3p, 4pⱼ, 5p) sont formés par des portions des surfaces internes (3i, 4iⱼ, 5i) de couches successives.

9. Dispositif d'isolation thermique multicouche selon l'une quelconque des revendications1 à 7, comprenant des trous non concentriques agencés de sorte à ménager au moins un escalier (207) dont les paliers successifs (203p, 204pⱼ, 205p) sont formés par des portions des surfaces internes de couches successives (203, 204ⱼ, 205).

10. Dispositif d'isolation thermique multicouche selon l'une quelconque des revendications précédentes, comprenant des trous circulaires agencés de sorte à ménager au moins un escalier (7) dont les paliers successifs (3p, 4pⱼ, 5p) sont formés par des portions des surfaces internes (3i, 4iⱼ, 5i).

11. Dispositif d'isolation thermique multicouche selon l'une quelconque des revendications précédentes, dans lequel plus une couche d'un escalier est proche de la couche interne, plus la taille du trou qui y est ménagé est importante.

12. Dispositif d'isolation thermique multicouche selon l'une quelconque des revendications précédentes, dans lequel ledit isolant (2) est agencé de sorte à s'étendre continûment sur l'intégralité de sa superficie.

13. Procédé de fabrication d'un dispositif d'isolation thermique multicouche selon l'une quelconque des revendications précédentes, **caractérisé en ce qu'**il comprend au moins une étape de formation (51) d'au moins un escalier (7), ladite étape de formation (51) consistant à percer des trous dans les couches qui, parmi les couches successives, appartiennent aux couches intermédiaires (4j) et/ou interne (5)

14. Procédé selon la revendication précédente, comprenant au moins une étape de formation (51) d'un escalier (107) réalisée lors d'une étape d'empilement des couches successives.

15. Procédé de fabrication d'un isolant thermique multicouche selon les revendications 13 à 14, comprenant au moins une étape de formation d'un escalier consistant à percer des trous présentant des dimensions différentes dans lesdites couches successives.

16. Procédé de fabrication d'un isolant thermique multicouche selon les revendications 14 à 15, comprenant au moins une étape de formation (51) d'un escalier (7) consistant à percer des trous présentant des dimensions sensiblement identiques dans lesdites couches successives.

17. Procédé de fabrication selon l'une quelconque des revendications 14 à 16, comprenant au moins une étape de dépôt (52) d'au moins un élément électriquement conducteur (6) sur les paliers (3p, 4pⱼ, 5p) d'au moins un escalier (7) de sorte à connecter électriquement les couches, à partir desquels les paliers dudit au moins un escalier est formé, entre elles.

## Claims

1. A thermal insulation device for a space structure (1) comprising a multilayer thermal insulation (2) comprising a stack of N layers (3, 4ⱼ, 5), N being an integer that is greater than 3, comprising an external layer (3) that is designed to face the space environment, intermediate layers (4ⱼ) and an internal layer (5) that is designed to face a space structure (1), said layers being electrically conducting on their internal surfaces (3i, 4ⱼ, 5i) oriented towards said space structure (1), said device further comprising a device for grounding said N layers, **characterised in that** the intermediate layers (4j) and the internal layer (5) are pierced with holes that are arranged so as to provide at least one staircase (7), the successive steps (3p, 4pⱼ, 5p) of which are formed by portions of internal surfaces of successive layers (3i, 4iⱼ, 5i) taken from the N layers, said device for grounding said N layers comprising at least one electrically conducting element (6) deposited on the steps (3p, 4pⱼ, 5p) of at least one staircase (7) so as to establish an electrical connection between the layers (3i, 4iⱼ, 5i) from which the steps (3p, 4pⱼ, 5p) of said at least one staircase are formed on which the electrically conducting element (6) is deposited.

2. The thermal insulation device according to the preceding claim, comprising a set of staircases (307a, 307b) that is arranged so that each of the N layers (303, 304ⱼ, 305) comprises at least one portion of its internal surface forming a step (303p, 304pⱼ, 305p) of a staircase (307a, 307b), the steps of the different staircases of said set of staircases being formed from different layers.

3. The thermal insulation device according to any one of the preceding claims, wherein at least one electrically conducting element (6) covers at least one staircase (7).

4. The thermal insulation device according to the preceding claim, wherein at least one electrically conducting element (6) fills the space separating at least one staircase and the plane defined by the external surface (5e) of the internal layer (5).

5. The thermal insulation device according to any one of the preceding claims, comprising at least one first means (9) for fixing an electrically conducting element (6) to the space structure (1).

6. The thermal insulation device according to the preceding claim, wherein at least one first fixing means (9) comprises a hook and loop attaching device (10), a first part (11) of said attaching device being fixed to said electrically conducting element (6), said first part (11) being designed to cooperate with a second part (12) of the device (10) that is fixed to said space structure (1).

7. The multilayer thermal insulation device according to any one of claims 5 to 6, comprising at least one first fixing means (9) for fixing an electrically conducting element (6) to the space structure (1) with electric conduction.

8. The multilayer thermal insulation device according to any one of the preceding claims, comprising concentric holes that are arranged so as to provide at least one staircase (7), the successive steps (3p, 4pⱼ, 5p) of which are formed by portions of internal surfaces (3i, 4iⱼ, 5i) of successive layers.

9. The multilayer thermal insulation device according to any one of claims 1 to 7, comprising non-concentric holes that are arranged so as to provide at least one staircase (207), the successive steps (203p, 204pⱼ, 205p) of which are formed by portions of internal surfaces of successive layers (203, 204ⱼ, 205).

10. The multilayer thermal insulation device according to any one of the preceding claims, comprising circular holes that are arranged so as to provide at least one staircase (7), the successive steps (3p, 4pⱼ, 5p) of which are formed by portions of internal surfaces (3i, 4iⱼ, 5i).

11. The multilayer thermal insulation device according to any one of the preceding claims, wherein the size of the hole increases as the distance of the layer of the staircase from the internal layer decreases.

12. The multilayer thermal insulation device according to any one of the preceding claims, wherein said insulation (2) is arranged so as to continuously extend over all of its surface area.

13. A method for manufacturing a multilayer thermal insulation device according to any one of the preceding claims, **characterised in that** it comprises at least one step of forming (51) at least one staircase (7), said forming step (51) consisting in piercing holes in the layers which, from the successive layers, belong to the intermediate (4j) and/or internal (5) layers.

14. The method according to the preceding claim, comprising at least one step of forming (51) a staircase (107) that is completed during a step of stacking successive layers.

15. The method for manufacturing a multilayer thermal insulation according to any one of claims 13 to 14, comprising at least one step of forming a staircase that consists in piercing holes with different dimensions in said successive layers.

16. The method for manufacturing a multilayer thermal insulation according to any one of claims 14 to 15, comprising at least one step of forming (51) a staircase (7) that consists in piercing holes with essentially identical dimensions in said successive layers.

17. The method for manufacturing a multilayer thermal insulation according to any one of claims 14 to 16, comprising at least one step of depositing (52) at least one electrically conducting element (6) on the steps (3p, 4pⱼ, 5p) of at least one staircase (7) so as to electrically interconnect the layers from which the steps of said at least one staircase are formed.

## Patentansprüche

1. Wärmeisolationsvorrichtung (1) in einer Weltraumkonstruktion, die Folgendes umfasst: eine mehrlagige Wärmeisolierung (2) mit einem Stapel von N Lagen (3, 4ⱼ, 5), wobei N eine ganze Zahl größer als 3 ist, einer äußeren Lage (3), die der Weltraumumgebung zugewandt werden soll, Zwischenlagen (4ⱼ) und einer Innenlage (5), die einer Weltraumkonstruktion (1) zugewandt werden soll, wobei die Lagen auf ihren der Weltraumkonstruktion (1) zugewandten Innenflächen (3i, 4ⱼ, 5i) elektrisch leitend sind, wobei die Vorrichtung ferner eine Vorrichtung zum Erden der N Lagen umfasst, **dadurch gekennzeichnet, dass** die Zwischenlagen (4j) und die Innenlage (5) mit Löchern durchbohrt sind, die so angeordnet sind, dass sie wenigstens eine Treppe (7) bilden, deren aufeinander folgende Stufen (3p, 4pⱼ, 5p) durch Abschnitte von Innenflächen von aufeinander folgenden Lagen (3i, 4iⱼ, 5i) gebildet werden, die direkt von den N Lagen genommen werden, wobei die Vorrichtung zum Erden der N Lagen wenigstens ein elektrisch leitendes Element (6) umfasst, das auf den Stufen (3p, 4pⱼ, 5p) von wenigstens einer Treppe (7) angeordnet ist, um die Lagen (3i, 4iⱼ, 5i), von denen die Stufen (3p, 4pⱼ, 5p) der wenigstens einen Treppe gebildet sind, auf der sich das elektrisch leitende Element (6) befindet, elektrisch miteinander zu verbinden.

2. Wärmeisolationsvorrichtung nach dem vorherigen Anspruch, die einen Satz Treppen (307a, 307b) umfasst, der so angeordnet ist, dass jede der N Lagen (303, 304ⱼ, 305) wenigstens einen Abschnitt ihrer eine Stufe (303p, 304pⱼ, 305p) einer Treppe (307a, 307b) bildenden Innenfläche umfasst, wobei die Stufen der verschiedenen Treppen des Treppensatzes von verschiedenen Lagen gebildet werden.

3. Wärmeisolationsvorrichtung nach einem der vorherigen Ansprüche, wobei wenigstens ein elektrisch leitendes Element (6) wenigstens eine Treppe (7) bedeckt.

4. Wärmeisolationsvorrichtung nach dem vorherigen Anspruch, wobei wenigstens ein elektrisch leitendes Element (6) den Raum ausfüllt, der wenigstens eine Treppe und die von der Außenfläche (5e) der Innenlage (5) definierte Ebene trennt.

5. Wärmeisolationsvorrichtung nach einem der vorherigen Ansprüche, die wenigstens ein erstes Mittel (9) zum Befestigen eines elektrisch leitenden Elements (6) an der Weltraumkonstruktion (1) umfasst.

6. Wärmeisolationsvorrichtung nach dem vorherigen Anspruch, wobei wenigstens ein erstes Befestigungsmittel (9) eine Klettverschlussvorrichtung (10) umfasst, wobei ein erster Teil (11) der Verschlussvorrichtung an dem elektrisch leitenden Element (6) befestigt wird, wobei der erste Teil (11) so ausgelegt ist, dass er mit einem an der Weltraumkonstruktion (1) befestigten zweiten Teil (12) der Vorrichtung (10) zusammenwirkt.

7. Mehrlagige Wärmeisolationsvorrichtung nach einem der Ansprüche 5 bis 6, die wenigstens ein erstes Befestigungsmittel (9) zum Befestigen eines elektrisch leitenden Elements (6) an der Weltraumkonstruktion (1) mit elektrischer Leitung umfasst.

8. Mehrlagige Wärmeisolationsvorrichtung nach einem der vorherigen Ansprüche, die konzentrische Löcher umfasst, die so angeordnet sind, dass wenigstens eine Treppe (7) entsteht, deren aufeinander folgende Stufen (3p, 4pⱼ, 5p) durch Abschnitte von Innenflächen (3i, 4iⱼ, 5i) von aufeinander folgenden Lagen gebildet werden.

9. Mehrlagige Wärmeisolationsvorrichtung nach einem der Ansprüche 1 bis 7, die nichtkonzentrische Löcher umfasst, die so angeordnet sind, dass wenigstens eine Treppe (207) entsteht, deren aufeinander folgende Stufen (203p, 204pⱼ, 205p) durch Abschnitte von Innenflächen von aufeinander folgenden Lagen (203, 204ⱼ, 205) gebildet werden.

10. Mehrlagige Wärmeisolationsvorrichtung nach einem der vorherigen Ansprüche, die kreisförmige Löcher umfasst, die so angeordnet sind, dass wenigstens eine Treppe (7) entsteht, deren aufeinander folgende Stufen (3p, 4pⱼ, 5p) durch Abschnitte von Innenflächen (3i, 4iⱼ, 5i) gebildet werden.

11. Mehrlagige Wärmeisolationsvorrichtung nach einem der vorherigen Ansprüche, wobei das vorgesehene Loch mit abnehmendem Abstand einer Lage einer Treppe von der Innenschicht immer größer wird.

12. Mehrlagige Wärmeisolationsvorrichtung nach einem der vorherigen Ansprüche, wobei die Isolation (2) so angeordnet ist, dass sie sich fortlaufend über ihre gesamte Oberfläche erstreckt.

13. Verfahren zur Herstellung einer mehrlagigen Wärmeisolationsvorrichtung nach einem der vorherigen Ansprüche, **dadurch gekennzeichnet, dass** es wenigstens einen Schritt des Bildens (51) von wenigstens einer Treppe (7) beinhaltet, wobei der Bildungsschritt (51) darin besteht, Löcher in die Lagen zu bohren, die unter den aufeinander folgenden Lagen zur mittleren (4j) und/oder inneren (5) Lage gehören.

14. Verfahren nach dem vorherigen Anspruch, das wenigstens einen Schritt des Bildens (51) einer Treppe (107) beinhaltet, die während eines Schrittes des Stapelns aufeinander folgender Lagen vervollständigt wird.

15. Verfahren zur Herstellung einer mehrlagigen Wärmeisolation nach einem der Ansprüche 13 bis 14, das wenigstens einen Schritt des Bildens einer Treppe beinhaltet, der darin besteht, Löcher mit unterschiedlichen Abmessungen in die aufeinander folgenden Lagen zu bohren.

16. Verfahren zur Herstellung einer mehrlagigen Wärmeisolation nach einem der Ansprüche 14 bis 15, das wenigstens einen Schritt des Bildens (51) einer Treppe (7) beinhaltet, der darin besteht, Löcher mit im Wesentlichen identischen Abmessungen in die aufeinander folgenden Lagen zu bohren.

17. Verfahren zur Herstellung einer mehrlagigen Wärmeisolation nach einem der Ansprüche 14 bis 16, das wenigstens einen Schritt des Absetzens (52) von wenigstens einem elektrisch leitenden Element (6) auf den Stufen (3p, 4pⱼ, 5p) von wenigstens einer Treppe (7) beinhaltet, um die Lagen, von denen die Stufen der wenigstens einen Treppe gebildet sind, elektrisch miteinander zu verbinden.
